# EUROPEAN PATENT APPLICATION

(11) **EP 3 629 278 A1**
(43) Date of publication of application: **01.04.2020**
(21) Application number: 19200262.4
(22) Date of filing: 27.09.2019
(51) Int. Cl.: G06Q 30/00, G06Q 30/06

(54) **METHOD AND SYSTEM OF VERIFICATION OF PARENTAL RESPONSABILITY HOLDERS' CONSENT FOR UTILIZATION/PURCHASE/CONSUMPTION OF PRODUCTS/SERVICES BY MINORS**

(30) Priority: 28.09.2018 IT 201800009032
(71) Applicant: INFOCERT S.p.A., 00187 Roma (IT)
(72) Inventor: CASATI, Egidio, 00187 ROMA (IT); PIATTI, Lorenzo, 00187 ROMA (IT); CORSETTI, Daniele, 00187 ROMA (IT); MALLIA, Elisa, 00187 ROMA (IT)
(74) Representative: Sordini, Lorenzo

(57) **Abstract**

The present invention concerns a method of verification of parental responsibility holders' consent for the utilization/purchase/consumption of products/services by minors, wherein: a minor user (1) uses a first electronic communication device (11) to connect via a telecommunication network (2) to a management server (31) of a provider of products/services (3) and request the utilization/purchase/consumption of a first given product/service that is provided by the provider of products/services (3) and that is utilizable/purchasable/consumable by minors having the consent of at least one respective parental responsibility holder; the management server (31) redirects the first electronic communication device (11) to a verification server (41) of a verification service provider (4), informing the verification server (41) that the first given product/service requested is utilizable/purchasable/consumable by minors having the consent of at least one respective parental responsibility holder, wherein said verification server (41) stores first identification data that includes data related to first authentication credentials that identify the minor user (1), data related to the age of the minor user (1) and data related to second authentication credentials that identify a parental responsibility holder (5) of the minor user (1); the verification server (41) requests the minor user (1) to authenticate himself/herself via the first electronic communication device (11); the minor user (1) provides the verification server (41) with the first authentication credentials via the first electronic communication device (11); the verification server (41) identifies the minor user (1) and detects that said minor user (1) is a minor based on the first authentication credentials provided by said minor user (1) and on the first identification data stored, and notifies the minor user (1), via the first electronic communication device (11), that the first given product/service requested is utilizable/purchasable/consumable only with the consent of the parental responsibility holder (5) of said minor user (1); the minor user (1) sends, via the first electronic communication device (11), a request for consent to a second electronic communication device (51) used by the parental responsibility holder (5) of said minor user (11); the parental responsibility holder (5) of the minor user (1) uses the second electronic communication device (51) to connect via a telecommunication network (2) to the verification server (41) and to provide the latter with the second authentication credentials; the verification server (41) identifies the parental responsibility holder (5) of the minor user (1) based on the second authentication credentials provided by said parental responsibility holder (5) of the minor user (1) and on the first identification data stored, and asks said parental responsibility holder (5) of the minor user (1) for consent for the utilization/purchase/consumption of the first given product/service by said minor user (1); the parental responsibility holder (5) of the minor user (1) provides or refuses, via the second electronic communication device (51), consent for the utilization/purchase/consumption of the first given product/service by said minor user (1); the verification server (41) notifies the minor user (1) and/or the management server (31) of whether the parental responsibility holder (5) of the minor user (1) has provided or refused consent for the utilization/purchase/consumption of the first given product/service by said minor user (1).

## Description

### CROSS-REFERENCE TO RELATED APPLICATIONS

This patent application claims priority from Italian patent application no. 102018000009032 filed on 28/09/2018.

### TECHNICAL FIELD OF INVENTION

The present invention concerns a method and a system for verifying parental responsibility holders' consent for utilization/purchase/consumption of products and/or services, material and/or immaterial, by minors.

### STATE OF THE ART

Today, countless material/immaterial products/services are available that can be utilized/purchased/consumed only by persons with ages equal to or greater than a predefined threshold (for example, defined by law). A typical example regards so-called film censorship. In fact, as is well known, in nearly all countries there are authorities or bodies responsible for (generally preventive) control of cinematographic works in order to establish if a film should be prohibited or not for minors of a certain age (for example 18 years, 16 years, 14 years, etc.).

In some cases, the minimum age requirement (for example, legal age) can be overcome by means of an explicit authorization (often required in writing) from the parental responsibility holder(s) (i.e. from one or both parents or, in their absence, the legal guardian). For example, at least in Italy, the consent of the parental responsibility holder(s) is necessary in order to tattoo a minor.

Naturally, in the case of cinema or a tattoo shop/laboratory, verification of the minimum age and/or consent of the parental responsibility holder(s) is easily carried out by the person wishing to see the film or be tattooed showing a valid identity document and, in the case of a minor who wants a tattoo, the presence of at least one parent or the legal guardian. Obviously, the same holds for all cases of "on-the-spot" use/purchase/consumption of products/services (i.e. when the user/purchaser/consumer is physically present at the place where the products/services are provided).

On the other hand, nowadays there is an increasingly massive use of computer networks (e.g. the Internet) and fixed/mobile electronic communication devices (e.g. computers, laptops, tablets, smartphones, smart TVs, smartwatches, etc.) for "remote" utilization/purchase/consumption of material/immaterial products/services. For example, the exponential increase in video streaming services does not allow guaranteeing the same safety protection that is present at the cinema, intended as a physical place. Furthermore, various services, such as opening a bank account or purchasing a SIM card, are undergoing a period of strong digitalization; given that these are services that require checking the applicant's age, dedicated instruments are needed that enable checking the information provided by the client with certainty. In fact, in this case, verification of the minimum age and/or consent of the parental responsibility holder(s) is much more difficult with respect to the "on-the-spot" case.

In particular, in many cases, due to the lack of dedicated instruments, the providers of remote products/services (which hereinafter will be called "remote providers" for brevity) limit themselves to asking the users their age, or even simply confirming that they are adults (or, in any case, have an age above a certain age threshold, for example, 16 years) without performing any check on the effective truth of these declarations. Therefore, the remote use/purchase/consumption of material/immaterial products/services (e.g. the use of a social network, the utilization of instantaneous messaging and/or email systems/services, the purchase/consumption of multimedia content, etc.) is very simple even for those (for example, minors) who possess neither the required minimum age nor the consent of the parental responsibility holder(s), with all the associated risks that follow (for example, the (potential) lack of legal validity/certainty of the digital transactions). Furthermore, if the requesting party declares not having the requirements for accessing the service, the remote providers are not able to provide their product/service in a lawful manner.

### OBJECT AND SUMMARY OF THE INVENTION

The Applicant has felt the need to tackle the problem of the lack of truly reliable/effective instruments for the verification of parental responsibility holders' consent for the remote utilization/purchase/consumption of products/services by minor users, in this way arriving at the present invention.

Thus, object of the present invention is to provide a method and a system that are capable of overcoming this problem.

This and other objects are achieved by the present invention, in so far as it relates to a method of verification of the parental responsibility holders' consent for the utilization/purchase/consumption of products/services by minors, as defined in the appended claims.

### BRIEF DESCRIPTION OF DRAWINGS

For a better understanding of the present invention, some preferred embodiments, provided purely by way of non-limitative example, will now be described with reference to the accompanying drawings, in which:
- Figure 1 schematically shows a high-level reference architecture for the implementation of a preferred embodiment of the present invention; and
- Figures 2-4 schematically show a usage example of said preferred embodiment of the present invention shown in Figure 1.

### DETAILED DESCRIPTION OF PREFERRED EMBODIMENTS OF THE INVENTION

The following description is provided to enable an expert in the field to embody and use the invention. Various modifications to the embodiments shown will be immediately obvious to experts and the generic principles described herein could be applied to other embodiments and applications without departing from the scope of protection of the present invention as defined in the appended claims.

Thus, the present invention is not intended to be limited to the embodiments set forth herein, but is to be accorded the widest scope consistent with the principles and features disclosed herein and defined in the appended claims.

The present invention concerns a method of verification of parental responsibility holders' consent for the utilization/purchase/consumption of products/services by minors, wherein:
- a minor user uses a first electronic communication device to
   - connect via a telecommunication network to a management server of a provider of products/services and
   - request the utilization/purchase/consumption of a first given product/service that is provided by the provider of products/services and that is utilizable/purchasable/consumable by minors having the consent of at least one respective parental responsibility holder;
- the management server redirects the first electronic communication device to a verification server of a verification service provider, informing the verification server that the first given product/service requested is utilizable/purchasable/consumable by minors having the consent of at least one respective parental responsibility holder, wherein said verification server stores first identification data including
   - data related to first authentication credentials that identify the minor user,
   - data related to the age of the minor user and
   - data related to second authentication credentials that identify a parental responsibility holder of the minor user;
- the verification server requests the minor user to authenticate himself/herself via the first electronic communication device;
- the minor user provides the verification server with the first authentication credentials via the first electronic communication device;
- the verification server
   - identifies the minor user and detects that said minor user is a minor based on the first authentication credentials provided by said minor user and on the first identification data stored, and
   - notifies the minor user, via the first electronic communication device, that the first given product/service requested is utilizable/purchasable/consumable only with the consent of the parental responsibility holder of said minor user;
- the minor user sends, via the first electronic communication device, a request for consent to a second electronic communication device used by the parental responsibility holder of said minor user;
- the parental responsibility holder of the minor user uses the second electronic communication device to connect via a telecommunication network to the verification server and to provide the latter with the second authentication credentials;
- the verification server
   - identifies the parental responsibility holder of the minor user based on the second authentication credentials provided by said parental responsibility holder of the minor user and on the first identification data stored, and
   - asks said parental responsibility holder of the minor user for consent for the utilization/purchase/consumption of the first given product/service by said minor user;
- the parental responsibility holder of the minor user provides or refuses, via the second electronic communication device, the consent for the utilization/purchase/consumption of the first given product/service by said minor user;
- the verification server notifies the minor user and/or the management server of whether the parental responsibility holder of the minor user has provided or refused the consent for the utilization/purchase/consumption of the first given product/service by said minor user.

Conveniently, the first given product/service is utilizable/purchasable/consumable by minors having the consent of at least one respective parental responsibility holder and an age that satisfies a predefined age requirement; in this case, it is convenient that:
- the management server redirects the first electronic communication device to the verification server, informing said verification server that the first given product/service requested is utilizable/purchasable/consumable by minors having the consent of at least one respective parental responsibility holder and an age that satisfies the predefined age requirement;
- the verification server verifies whether the age of the minor user satisfies the predefined age requirement based on the first identification data stored;
- if the age of the minor user does not satisfy the predefined age requirement, the verification server notifies the minor user and/or the management server that said minor user does not have an age appropriate for the utilization/purchase/consumption of the first given product/service;
- instead, if the age of the minor user satisfies the predefined age requirement, the verification server notifies said minor user that the first given product/service requested is utilizable/purchasable/consumable only with the consent of the parental responsibility holder of said minor user.

Conveniently, the predefined age requirement includes a predefined minimum/maximum age threshold, or a predefined age range, for which the age of the minor user satisfies said predefined age requirement if it is equal to, or greater/less than, said predefined minimum/maximum age threshold, or if it is comprised in said predefined age range. In other words, the method according to the present invention can be conveniently exploited for the use/purchase/consumption of products/services exclusively reserved/dedicated to minors with ages above/below a predefined minimum/maximum age (for example, minors with ages above/below 14 or 16 years), or with ages in a specific age range (for example, minors between 10 and 13 years).

Preferably, the minor user uses:
- a first browser or a first predefined software application installed on the first electronic communication device to communicate with the management server; and
- the first browser or a second predefined software application installed on the first electronic communication device to communicate with the verification server.

Preferably, the parental responsibility holder of the minor user uses a second browser or a third predefined software application installed on the second electronic communication device to communicate with the verification server.

Furthermore, the method according to the present invention can be conveniently exploited for controlling the use/purchase/consumption of:
- products/services dedicated to both adults and minors having the consent of at least one respective parental responsibility holder,
- products/services exclusively reserved/dedicated to minors and
- products/services exclusively reserved/dedicated to adults.

For example, the first given product/service could be utilizable/purchasable/consumable also by adults; in this case, it is convenient that:
- an adult user uses a third electronic communication device to
   - connect via a telecommunication network to the management server and
   - request the utilization/purchase/consumption of the first given product/service;
- the management server redirects the third electronic communication device to the verification server, informing the latter that the first given product/service requested is utilizable/purchasable/consumable also by adults, wherein said verification server stores second identification data that includes
   - data related to third authentication credentials that identify the adult user and
   - data related to the age of the adult user;
- the verification server asks the adult user to authenticate himself/herself via the third electronic communication device;
- the adult user provides the verification server with the third authentication credentials via the third electronic communication device;
- the verification server
   - identifies the adult user and detects that said adult user is an adult based on the third authentication credentials provided by said adult user and on the second identification data stored, and
   - notifies the adult user and/or the management server that said adult user has an age appropriate for the utilization/purchase/consumption of the first given product/service.

Alternatively, the first given product/service might not be utilizable/purchasable/consumable by adults; in this case, it is convenient that:
- the management server redirects the third electronic communication device to the verification server, informing the latter that the first given product/service requested is not utilizable/purchasable/consumable by adults; and
- the verification server
   - identifies the adult user and detects that said adult user is an adult based on the third authentication credentials provided by said adult user and on the second identification data stored, and
   - notifies the adult user and/or the management server that said adult user does not have an age appropriate for the utilization/purchase/consumption of the first given product/service.

Furthermore, it might also conveniently happen that:
- the minor user uses the first electronic communication device to
   - connect via a telecommunication network to the management server and
   - request the utilization/purchase/consumption of a second given product/service that is provided by the provider of products/services and that is utilizable/purchasable/consumable only by adults;
- the management server redirects the first electronic communication device to the verification server, informing the verification server that the second given product/service requested is utilizable/purchasable/consumable only by adults;
- the verification server asks the minor user to authenticate himself/herself via the first electronic communication device;
- the minor user provides the verification server with the first authentication credentials via the first electronic communication device;
- the verification server
   - identifies the minor user and detects that said minor user is a minor based on the first authentication credentials provided by said minor user and on the first identification data stored, and
   - notifies the minor user and/or the management server that said minor user does not have an age appropriate for the utilization/purchase/consumption of the second given product/service;
- the adult user uses the third electronic communication device to
   - connect via a telecommunication network to the management server and
   - request the utilization/purchase/consumption of the second given product/service;
- the management server redirects the third electronic communication device to the verification server, informing the latter that the second given product/service requested is utilizable/purchasable/consumable only by adults;
- the verification server asks the adult user to authenticate himself/herself via the third electronic communication device;
- the adult user provides the verification server with the third authentication credentials via the third electronic communication device;
- the verification server
   - identifies the adult user and detects that said adult user is an adult based on the third authentication credentials provided by said adult user and on the second identification data stored, and
   - notifies the adult user and/or the management server that said adult user has an age appropriate for the utilization/purchase/consumption of the second given product/service.

Preferably, the adult user uses:
- a third browser or a fourth predefined software application installed on the third electronic communication device to communicate with the management server; and
- the third browser or a fifth predefined software application installed on the third electronic communication device to communicate with the verification server.

Regarding the first/second/third authentication credentials, instead of the actual credentials, the verification server preferably stores indirect and non-reversible elements useful for the verification of the authentication credentials.

For a better understanding of the present invention, a preferred (but absolutely non-limitative) embodiment of the present invention will be described hereinafter in relation to the case of remote utilization/purchase/consumption of material/immaterial products/services, it being understood that the present invention can be advantageously exploited also in the case of on-the-spot utilization/purchase/consumption of material/immaterial products/services.

Furthermore, explicit reference will be made hereinafter, purely for simplicity of description, to the case of a minor user, i.e. a user less than 18 years old (therefore taking into consideration an age threshold of 18 years, as set by many national legislations, for example by Italian law, for reaching legal age). However, it is understood that the teachings and principles of the present invention can be advantageously exploited, mutatis mutandis, with any predefined age threshold (for example 14, 16 or 21 years), which might not correspond to that for reaching legal age.

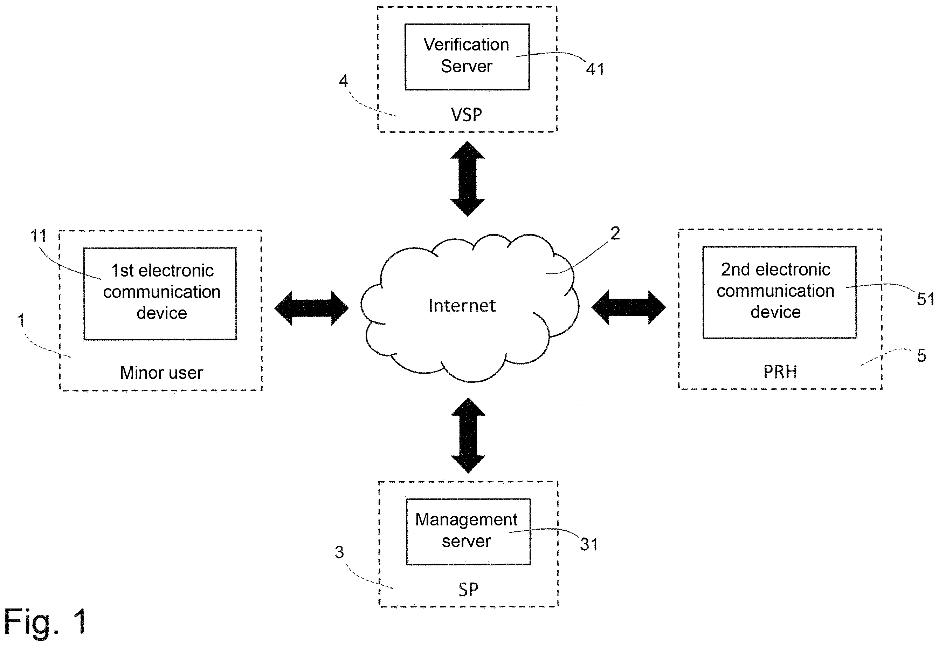

Figure 1 schematically shows a high-level reference architecture for the implementation of a preferred embodiment of the present invention.

As shown in Figure 1, a minor user 1 uses a first electronic communication device 11 of a fixed or mobile type (for example, a computer, laptop, tablet, smartphone, smart TV, smartwatch, etc.) to connect, via the Internet network 2, to a management server 31 of a remote provider 3 (concisely indicated in Figure 1 and hereinafter as SP, acronym of "Service Provider") for the remote utilization/purchase/consumption of material and/or immaterial products and/or services. To this end, the minor user 1 could conveniently utilize a browser or a first predefined software application (hereinafter called as first predefined app) installed on the first electronic communication device 11. For its part, the management server 31 could be conveniently programmed to:
- host a web site/portal or implement a web app to interact with the browser of the first electronic communication device 11; or
- interact directly with the first predefined app installed on said first electronic communication device 11.

At least one or more given products/services provided by the SP 3 can be utilized/purchased/consumed by adult users (or, more in general, by users above a second predefined age threshold), or by minor users with the consent of the respective parental responsibility holder(s) (i.e. from one or both parents or, in their absence, the legal guardian). Therefore, in order to be utilized/purchased/consumed, these given products/services require a preliminary age check on the users and, in the case of minor users, verification of the consent of the parental responsibility holder(s).

In order to provide said given products/services, the SP 3 uses a verification service provided by a provider 4 (concisely indicated in Figure 1 and hereinafter as VSP, acronym of "Verification Service Provider"). In particular, the management server 31 of the SP 3 is programmed to connect, via the Internet network 2, to a verification server 41 of the VSP 4 to make use of said verification service (concisely indicated hereinafter as VS, acronym of "Verification Service").

Therefore, in order to be able to utilize/purchase/consume the given products/services, the minor user 1 and at least one respective parental responsibility holder 5 (concisely indicated in Figure 1 and hereinafter as PRH, acronym of "Parental Responsibility Holder" - i.e. at least one of the parents or, in their absence, the legal guardian) can conveniently register for (i.e. subscribe to) said VS provided by the VSP 4.

To this end, the PRH 5 and conveniently also the minor user 1 sign(s) a contract with the VSP 4 and provide the latter with one or more documents proving the identity of said PRH 5 and said minor user 1 (for example, identity cards, passports, etc.), as well as at least one document attesting that the PRH 5 is the parental responsibility holder of the minor user 1 (for example, with reference to Italy, the so-called family certificate). Furthermore, the PRH 5 and the minor user 1 also conveniently provide the VSP 4 with personal data that can also comprise telephone numbers (mobile phone numbers for example) and/or email addresses of said PRH 5 and/or said minor user 1. Then, the VSP 4 back-office checks the data and documents provided by the PRH 5 and the minor user 1 and proceeds with the identification of these two parties with direct or remote identification methods (for example, by means of identification techniques based on videoconference systems, such as, for example, the identification techniques described in the Italian patent No. 1418080 and in the Italian patent application No. 102016000049466, in the name of the Applicant). Furthermore, the step of registration for the VS provided by the VSP 4 can conveniently comprise said VSP 4 carrying out verification procedures on the data and documents provided by the minor user 1 and by the PRH 5, for example, procedures based on connecting to databases to check the data and/or documents provided, and/or procedures to check the telephone numbers and/or email addresses provided (for example, procedures based on the sending of a one-time password (OTP)).

The step of registration for the VS provided by the VSP 4 conveniently terminates with providing the minor user 1 and the PRH 5 with respective authentication credentials for the VS (e.g. username and password) and, preferably, also with the installation, by the minor user 1 on the first electronic communication device 11 and by the PRH 5 on a respective second electronic communication device 51 (for example a computer, laptop, tablet, smartphone, smart TV, smartwatch, etc.), of a second predefined app and a third predefined app, respectively, for using the VS. In particular, the installation of said second predefined app and said third predefined app on the first electronic communication device 11 and on the second electronic communication device 51, respectively, can conveniently also include the execution of one or more so-called "device binding" procedures, for example, based on sending an OTP.

Once the step of registration for the VS provided by the VSP 4 is completed, the minor user 1 can then use this service in order to use/purchase/consume products/services provided by the SP 3.

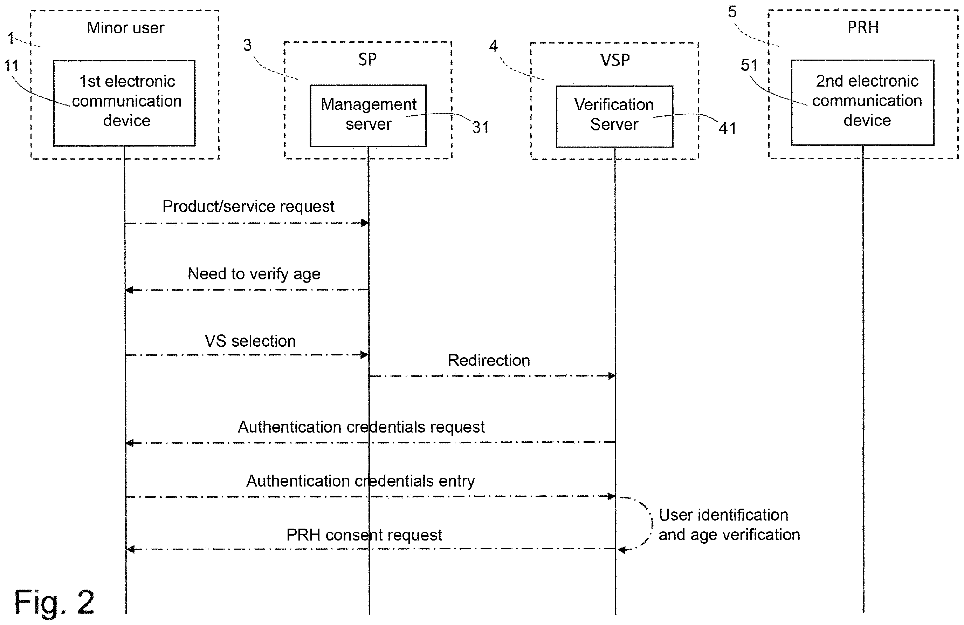

With regard to this, Figures 2-4 schematically illustrate an example scenario in which the minor user 1 wishes to utilize/purchase/consume one the given products/services provided by the SP 3.

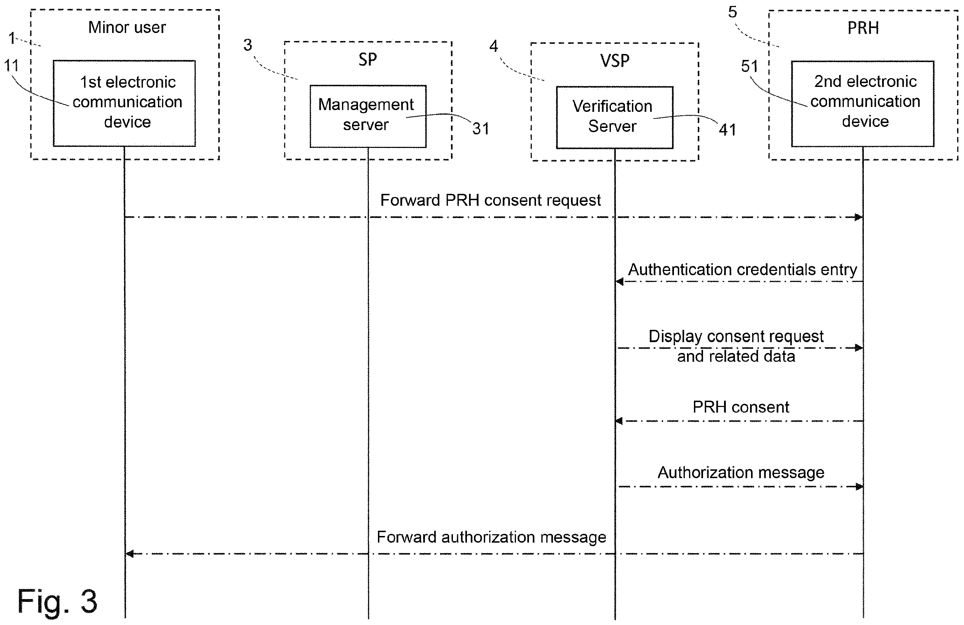

In particular, as shown in Figure 3,
- the minor user 1 uses the first electronic communication device 11 (in particular, conveniently uses the aforementioned browser or the aforementioned first predefined app installed on said first electronic communication device 11) to connect to the management server 31 of the SP 3 in order to utilize/purchase/consume one of the given products/services provided by the SP 3;
- the management server 31 informs the minor user 1 that in order to utilize/purchase/consume the chosen product/service, it is necessary to carry out an age check and, in the case of being aged below 18 years, it will be necessary to have the consent of at least one parental responsibility holder;
- the minor user 1 then chooses to use the VS provided by the VSP 4, and so the management server 31 redirects the first electronic communication device 11 to the verification server 41, communicating to the latter the predefined requirements that must be satisfied (in this specific example, the fact of having an age equal to or greater than 18 years or, in the case of a minor user, the need for the consent of at least one parental responsibility holder) and conveniently providing said verification server 41 with
   - at least one identifier of a web resource (for example, a URI, namely a Uniform Resource Identifier) that is exposed, i.e. hosted, by the management server 31 and which must be invoked to inform said management server 31 of the outcome of the predefined requirements verification (for example, a first address of the URL (Uniform Resource Locator) or IP (Internet Protocol) type associated with a successful outcome of said verification and a second URL or IP address associated with a negative result of said verification, or a single parameterized URL or IP address in which the outcome of the predefined requirements verification is parametrically differentiated), and,
   - conveniently, also additional data (for example attributes associated with the predefined requirements verification request);
- the verification server 41 then requests the minor user 1 to enter his/her authentication credentials for the VS (for example, by using said browser and/or said second predefined app installed on the first electronic communication device 11);
- the minor user 1 then enters his/her authentication credentials for the VS, thereby allowing the verification server 41 to identify said minor user 1 and to ascertain that the latter is aged below 18 years;
- therefore, the verification server 41 sends to the minor user 1 a request for the consent of at least one parental responsibility holder of said minor user 1, in which said consent request includes information unequivocally associated with said consent request, which can conveniently include data indicative of
   - a random identification number assigned by the verification server 41 to said consent request,
   - an authentication code,
   - a URI associated with the SP 3,
   - a description of the SP 3,
   - the predefined requirements, and
   - the attributes associated with the verification request of said predefined requirements.

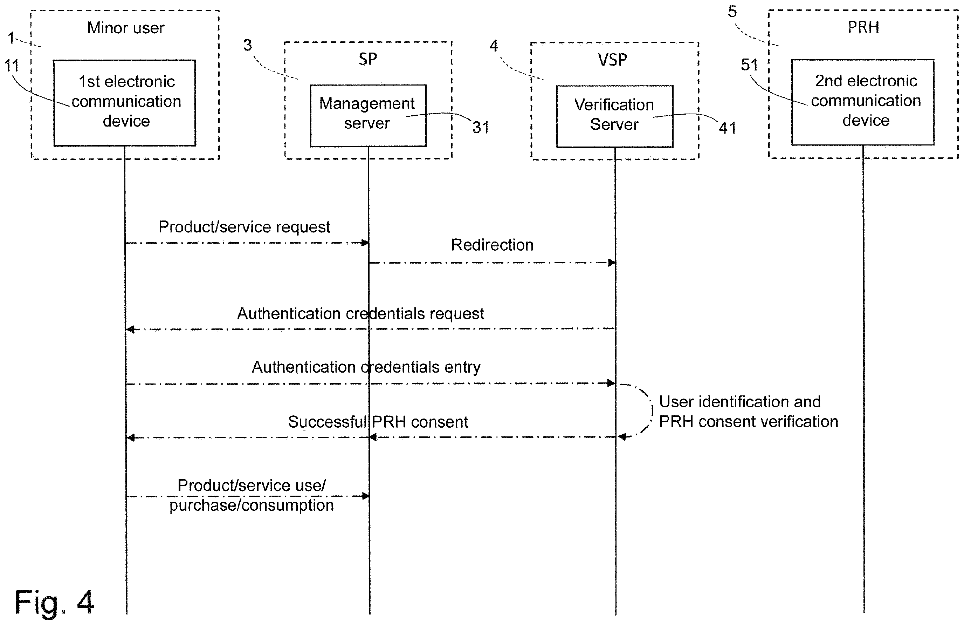

Furthermore, referring to Figure 4,
- the minor user 1 forwards, via the second predefined app or via email, the consent request to the PRH 5 (for example, to the third predefined app installed on the second electronic communication device 51 used by the PRH 5 or to an email address of said PRH 5);
- said PRH 5 then opens the third predefined app entering his/her own authentication credentials for the VS, thus allowing the verification server 41 to identify said PRH 5 (or, to this end, using a browser installed on the second communication device 51) ;
- the verification server 41 then shows the consent request and the related information to the PRH 5 via the third predefined app;
- the PRH 5 then provides his/her consent via the third predefined app; and
- the verification server 41 then sends an authorization message to the PRH 5, who then forwards said authorization message (for example, via the third predefined app or via email) to the minor user 1.

Finally, referring to Figure 5,
- the minor user 1 uses the first electronic communication device 11 to again request the use/purchase/consumption of the given previously chosen product/service from the SP 3;
- the management server 31 again redirects the first electronic communication device 11 to the verification server 41, which again requests the minor user 1 to enter his/her authentication credentials for the VS;
- the minor user 1 then enters his/her authentication credentials for the VS, thus allowing the verification server 41 to identify said minor user 1 and to ascertain that the latter has received consent from the PRH 5;
- therefore, the verification server 41 communicates the successful outcome of the predefined requirements verification to the management server 31 (for example, conveniently using the first URL/IP address or the single URL/IP parameterized address) and to the minor user 1, who can then finally proceed with the use/purchase/consumption of the given product/service provided by the SP 3.

Obviously, the verification mechanism just described can be advantageously exploited with any predefined age threshold and even for on-the-spot applications, for example, in the case of a tattoo shop/laboratory that allows online booking for tattooing a minor with prior consent of the parental responsibility holder.

The innumerable technical advantages of the present invention are immediately evident from the foregoing description.

In particular, it is important to stress the point that the present invention provides a truly reliable/effective instrument for the verification of parental responsibility holders' consent for remote or on-the-spot use/purchase/consumption of material and/or immaterial products and/or services by minors, for example, for:
- use of social networks,
- utilization of instantaneous messaging and email systems/services,
- purchase/consumption of multimedia content,
- online purchase of banking instruments dedicated to minors,
- online purchase of SIM cards,
- online purchase of cinema tickets,
- online tattoo booking,
- authorization to go on school trips and study vacations,
- enrolment on training courses,
- making online payments and cashpoint withdrawals,
- online purchase of wines and spirits,
- etc.

More in general, the present invention enables increasing the legal certainty of digital transactions, reducing the possibility of challenging electronic contracts for defects linked to the legal incapacity of a given party. In fact, due to the verification of the parental responsibility holder's consent for a minor being carried out in a highly reliable/effective manner, the present invention guarantees merchants and providers of services/products that the signed contracts and/or requests to access products/services have full legal value. On the other hand, if the requirement for consent of the parental responsibility holder is not met, the invention enables the merchant or provider of products/services to refuse the use/purchase/supply of the requested product/service.

Furthermore, the approach used by the present invention enables respecting the principle of data minimization ratified by Italian Legislative Decree 196/2003 (Privacy Code) and by EU Regulation 679/2016 (GDPR), as it enables checking the age of a user without requesting further data, such as the date of birth (i.e. only the necessary information is given).

In conclusion, it is clear that various modifications can be applied to the present invention without departing from the scope of the invention as defined in the appended claims.

## Claims

1. Method of verification of parental responsibility holders' consent for utilization/purchase/consumption of products/services by minors, wherein:
• a minor user (1) uses a first electronic communication device (11) to
- connect via a telecommunication network (2) to a management server (31) of a provider of products/services (3) and
- request the utilization/purchase/consumption of a first given product/service that is provided by the provider of products/services (3) and that is utilizable/purchasable/consumable by minors having the consent of at least one respective parental responsibility holder;
• the management server (31) redirects the first electronic communication device (11) to a verification server (41) of a verification service provider (4), informing the verification server (41) that the first given product/service requested is utilizable/purchasable/consumable by minors having the consent of at least one respective parental responsibility holder, wherein said verification server (41) stores first identification data that includes
- data related to first authentication credentials that identify the minor user (1),
- data related to the age of the minor user (1) and
- data related to second authentication credentials that identify a parental responsibility holder (5) of the minor user (1);
• the verification server (41) requests the minor user (1) to authenticate himself/herself via the first electronic communication device (11);
• the minor user (1) provides the verification server (41) with the first authentication credentials via the first electronic communication device (11);
• the verification server (41)
- identifies the minor user (1) and detects that said minor user (1) is a minor based on the first authentication credentials provided by said minor user (1) and on the first identification data stored, and
- notifies the minor user (1), via the first electronic communication device (11), that the first given product/service requested is utilizable/purchasable/consumable only with the consent of the parental responsibility holder (5) of said minor user (1) ;
• the minor user (1) sends, via the first electronic communication device (11), a request for consent to a second electronic communication device (51) used by the parental responsibility holder (5) of said minor user (11);
• the parental responsibility holder (5) of the minor user (1) uses the second electronic communication device (51) to connect via a telecommunication network (2) to the verification server (41) and to provide the latter with the second authentication credentials;
• the verification server (41)
- identifies the parental responsibility holder (5) of the minor user (1) based on the second authentication credentials provided by said parental responsibility holder (5) of the minor user (1) and on the first identification data stored, and
- asks said parental responsibility holder (5) of the minor user (1) for consent for the utilization/purchase/consumption of the first given product/service by said minor user (1);
• the parental responsibility holder (5) of the minor user (1) provides or refuses, via the second electronic communication device (51), consent for the utilization/purchase/consumption of the first given product/service by said minor user (1);
• the verification server (41) notifies the minor user (1) and/or the management server (31) of whether the parental responsibility holder (5) of the minor user (1) has provided or refused consent for the utilization/purchase/consumption of the first given product/service by said minor user (1).

2. The method of claim 1, wherein the first given product/service is utilizable/purchasable/consumable by minors having the consent of at least one respective parental responsibility holder and an age that satisfies a predefined age requirement; wherein the management server (31) redirects the first electronic communication device (11) to the verification server (41), informing said verification server (41) that the first given product/service requested is utilizable/purchasable/consumable by minors having the consent of at least one respective parental responsibility holder and an age that satisfies the predefined age requirement;
wherein the verification server (41) verifies whether the age of the minor user (11) satisfies the predefined age requirement based on the first identification data stored;
and wherein
- if the age of the minor user (11) does not satisfy the predefined age requirement, the verification server (41) notifies the minor user (1) and/or the management server (31) that said minor user does not have an age appropriate for the utilization/purchase/consumption of the first given product/service, or
- if the age of the minor user (11) satisfies the predefined age requirement, the verification server (41) notifies said minor user (1) that the first given product/service requested is utilizable/purchasable/consumable only with the consent of the parental responsibility holder (5) of said minor user (1).

3. The method of claim 2, wherein the predefined age requirement includes:
• a predefined minimum/maximum age threshold, or
• a predefined age range;
and wherein the age of the minor user (11) satisfies said predefined age requirement:
• if it is equal to, or greater/less than, said predefined minimum/maximum age threshold, or
• if it is comprised in said predefined age range.

4. The method according to any preceding claim, wherein the minor user (1) uses:
• a first browser or a first predefined software application installed on the first electronic communication device (11) to communicate with the management server (31); and
• the first browser or a second predefined software application installed on the first electronic communication device (11) to communicate with the verification server (41);
and wherein the parental responsibility holder (5) of the minor user (1) uses a second browser or a third predefined software application installed on the second electronic communication device (51) to communicate with the verification server (41).

5. The method according to any preceding claim, wherein the first given product/service is utilizable/purchasable/consumable also by adults, and wherein:
• an adult user uses a third electronic communication device to
- connect via a telecommunication network (2) to the management server (31) and
- request the utilization/purchase/consumption of the first given product/service;
• the management server (31) redirects the third electronic communication device to the verification server (41), informing the latter that the first given product/service requested is utilizable/purchasable/consumable also by adults, wherein said verification server (41) stores second identification data that includes
- data related to third authentication credentials that identify the adult user and
- data related to the age of the adult user;
• the verification server (41) asks the adult user to authenticate himself/herself via the third electronic communication device;
• the adult user provides the verification server (41) with the third authentication credentials via the third electronic communication device;
• the verification server (41)
- identifies the adult user and detects that said adult user is an adult based on the third authentication credentials provided by said adult user and on the second identification data stored, and
- notifies the adult user and/or the management server (31) that said adult user has an age appropriate for the utilization/purchase/consumption of the first given product/service.

6. The method according to any one claim 1-4, wherein the first given product/service is not utilizable/purchasable/consumable by adults, and wherein:
• an adult user uses a third electronic communication device to
- connect via a telecommunication network (2) to the management server (31) and
- request the utilization/purchase/consumption of the first given product/service;
• the management server (31) redirects the third electronic communication device to the verification server (41), informing the latter that the first given product/service requested is not utilizable/purchasable/consumable by adults, wherein said verification server (41) stores second identification data that includes
- data related to third authentication credentials that identify the adult user and
- data related to the age of the adult user;
• the verification server (41) asks the adult user to authenticate himself/herself via the third electronic communication device;
• the adult user provides the verification server (41) with the third authentication credentials via the third electronic communication device;
• the verification server (41)
- identifies the adult user and detects that said adult user is an adult based on the third authentication credentials provided by said adult user and on the second identification data stored, and
- notifies the adult user and/or the management server (31) that said adult user does not have an age appropriate for the utilization/purchase/consumption of the first given product/service.

7. The method according to any preceding claim, wherein:
• the minor user (1) uses the first electronic communication device (11) to
- connect via a telecommunication network (2) to the management server (31) and
- request the utilization/purchase/consumption of a second given product/service that is provided by the provider of products/services (3) and that is utilizable/purchasable/consumable only by adults;
• the management server (31) redirects the first electronic communication device (11) to the verification server (41), informing the verification server (41) that the second given product/service requested is utilizable/purchasable/consumable only by adults;
• the verification server (41) asks the minor user (1) to authenticate himself/herself via the first electronic communication device (11);
• the minor user (1) provides the verification server (41) with the first authentication credentials via the first electronic communication device (11);
• the verification server (41)
- identifies the minor user (1) and detects that said minor user (1) is a minor based on the first authentication credentials provided by said minor user (1) and on the first identification data stored, and
- notifies the minor user (1) and/or the management server (31) that said minor user (1) does not have an age appropriate for the utilization/purchase/consumption of the second given product/service;
and wherein:
• an adult user uses a third electronic communication device to
- connect via a telecommunication network (2) to the management server (31) and
- request the utilization/purchase/consumption of the second given product/service;
• the management server (31) redirects the third electronic communication device to the verification server (41), informing the latter that the second given product/service requested is utilizable/purchasable/consumable only by adults, wherein said verification server (41) stores second identification data that includes
- data related to third authentication credentials that identify the adult user and
- data related to the age of the adult user;
• the verification server (41) asks the adult user to authenticate himself/herself via the third electronic communication device;
• the adult user provides the verification server (41) with third authentication credentials via the third electronic communication device;
• the verification server (41)
- identifies the adult user and detects that said adult user is an adult based on the third authentication credentials provided by said adult user and on the second identification data stored, and
- notifies the adult user and/or the management server (31) that said adult user has an age appropriate for the utilization/purchase/consumption of the second given product/service.

8. The method according to any claim 5-7, wherein the adult user uses:
• a third browser or a fourth predefined software application installed on the third electronic communication device to communicate with the management server (31); and
• the third browser or a fifth predefined software application installed on the third electronic communication device to communicate with the verification server (41).

9. A server (41) configured to communicate via one or more telecommunication networks (2) with electronic communication devices (11,51) of users (1,5) and with management servers (31) of providers of products/services (3), wherein said server (41) is programmed to implement the method of verification of parental responsibility holders' consent for the utilization/purchase/consumption of products/services by minors as claimed in any preceding claim.

10. Software application installable on an electronic communication device (11,51) of a user (1,5) and configured to cooperate with a verification server (41) to implement the method of verification of parental responsibility holders' consent for the utilization/purchase/consumption of products/services by minors as claimed in any claim 1-8.
